# EUROPEAN PATENT APPLICATION

(11) **EP 4 354 571 A1**
(43) Date of publication of application: **17.04.2024**
(21) Application number: 23197695.2
(22) Date of filing: 15.09.2023
(51) Int. Cl.: H01M 10/04, H01M 50/516, H01M 50/522, B23K 3/08, B23K 37/04, B25B 5/00, B23K 37/047

(54) **BATTERY MODULE MANUFACTURING CLAMPING ASSEMBLY AND METHOD OF CLAMPING A BATTERY PALLET FOR WELDING**

(30) Priority: 15.09.2022 US 202263406980 P
(71) Applicant: ATS Industrial Automation Inc., Cambridge Ontario N3H 4R7 (CA)
(72) Inventor: DONNELLY, Shawn, Cambridge (CA); BIAFORE, Robert, Cambridge (CA)
(74) Representative: Noble, Nicholas

(57) **Abstract**

The present disclosure provides battery module manufacturing clamping assembly and a method of clamping a battery pallet for welding. According to the present disclosure, a battery module manufacturing clamping assembly comprises a pallet assembly, a clamping plate, and a lift system for actuating the pallet assembly with respect to the clamping plate. The pallet assembly comprises a spring under each battery cell in the battery pallet, and the battery pallet can be actuated by the lift system into a clamped position where the pallet base plate and the clamping plate cause a top portion of the plurality of battery cells to be in contact with the conductive lattice structure for welding, and wherein a pre-determined contact force is applied to the battery cells by the plurality of springs.

## Description

### CROSS-REFERENCE TO RELATED APPLICATIONS

This application claims priority to US Provisional Patent Application No. 63/406,980, filed on September 15, 2022.

### TECHNICAL FIELD

The present disclosure relates to manufacturing battery modules, in particular to manufacturing a battery module comprising a plurality of battery cells.

### BACKGROUND

Battery packs for use in automotive, residential or industrial applications typically includes multiple modules each containing hundreds to thousands of battery cells connected together to achieve a desired voltage. The battery modules require the individual battery cells to be connected together by a conductive lattice within the module, however the cylindrical shape and size of the cells presents challenges in ensuring consistent placement within the module during the assembly to ensure the alignment of the battery electrodes with the lattice. The battery module can be assembled using a robot for welding the battery cells in a fixture to the conductive lattice that defines the circuit of the battery module, however inaccurate or faulty welds between the lattice and the batteries can impact the performance of the battery module and/or the associated battery pack. Ensuring accuracy of the welds is important in providing efficient assembly and mitigating future failures and the performance of the battery module.

When welding the battery cells to the conductive lattice structure, the individual battery cells are typically welded using laser welding. The welding laser is moved between each welding location, which is a cumbersome process and is prone to errors based upon inaccuracy in battery positions relative to the conductive lattice. Any error in the welding process can result in failure of the battery module. In the assembly process the battery cells can have slightly different alignments between cells and variations in alignment with the conductive lattice increasing the difficultly in ensure accurate and consistent welds. Ensuring consistent positioning and tolerances between the battery cells and conductive lattice can improve the weld quality and consistency.

Accordingly, an improved system and method for manufacturing battery modules comprising a plurality of battery cells remains highly desirable.

### BRIEF DESCRIPTION OF THE DRAWINGS

Features and advantages of the present disclosure will become apparent from the following detailed description, taken in combination with the appended drawings, in which:
FIGs. 1A-B show an exemplary battery module manufacturing station in accordance with the present disclosure;
FIGs. 2A-B show the battery module manufacturing station with a lift system in a raised and lowered position, respectively;
FIGs. 3A-I show the battery module clamped to the clamping plate and configured for welding;
FIG. 4 shows a method of manufacturing a battery module; and
FIG. 5 shows a method of clamping a battery module to a conductive lattice structure.

It will be noted that throughout the appended drawings, like features are identified by like reference numerals.

### DETAILED DESCRIPTION

One general aspect includes a battery module manufacturing clamping assembly. The battery module manufacturing clamping assembly includes a pallet base plate configured to support a plurality of battery cells thereon; a plurality of springs arranged on the pallet base plate; a plurality of spring caps respectively coupled to the plurality of springs, and each of the plurality of spring caps configured to interface with a lower portion of a respective battery cell of the plurality of batteries; a clamping plate providing a plurality of apertures to facilitate welding a conductive lattice structure to each of the plurality of battery cells; and a lift system configured to actuate the pallet base plate between a loading position for arranging the plurality of battery cells on the pallet base plate and a clamped position where the pallet base plate and the clamping plate cause a top portion of the plurality of battery cells to be in contact with the conductive lattice structure for welding, and where a pre-determined contact force is applied to the battery cells by the plurality of springs.

Implementations may include one or more of the following features. The battery module manufacturing clamping assembly where the conductive lattice structure may include an electrical bus bar and a plurality of welding protrusions coupled to the electrical bus bar, and where each of the plurality of springs are configured to apply the pre-determined contact force when compressed to provide contact between each of the plurality of battery cells and respective of the plurality of welding protrusions. The plurality of apertures of the clamping plate expose first weld sites between first cell terminals of the plurality of battery cells and respective of the plurality of welding protrusions. A second plurality of apertures of a second clamping plate expose second weld sites between second cell terminals of the plurality of battery cells and respective of the plurality of welding protrusions. The battery module manufacturing clamping assembly may include translation means for translating the lift system between the clamping plate and the second clamping plate. The pallet frame is configured to interface with the pallet lifting plate. The lift system may include an actuator for actuating the pallet lifting plate in a vertical direction. The clamping assembly may include a cell holder arranged at the upper portion of the plurality of battery cells to further support the plurality of battery cells on the pallet base plate. A clamping finger may be coupled to the clamping plate against which the plurality of battery cells are clamped. The clamping finger may be made at least partially of an electrically isolating material.

One general aspect includes a method of manufacturing a battery module. The method also includes arranging a plurality of battery cells on a pallet base plate, the pallet base plate may include a plurality of springs and a plurality of spring caps coupled to the plurality of springs, each of the plurality of spring caps configured to interface with a lower portion of a respective battery cell; inserting a conductive lattice structure between the plurality of battery cells and a clamping plate, the clamping plate providing a plurality of apertures to facilitate welding a conductive lattice structure to each of the plurality of battery cells; and actuating the pallet base plate toward the clamping plate to cause a top portion of the plurality of battery cells to be in contact with the conductive lattice structure for welding, where a pre-determined contact force is applied to the battery cells by the plurality of springs.

Implementations may include one or more of the following features. The method where the plurality of apertures of the clamping plate expose first weld sites between first cell terminals of the plurality of battery cells and respective of a plurality of welding protrusions of the conductive lattice structure, the method may include welding the first cell terminals of each battery cell to a respective welding protrusion. The second plurality of apertures of the second clamping plate expose second weld sites between second cell terminals of the plurality of battery cells and respective of the plurality of welding protrusions, and the method may include: actuating the pallet base plate toward the second clamping plate to cause the top portion of the plurality of battery cells to be in contact with the conductive lattice structure and the second clamping plate for welding, where the pre-determined contact force is applied to the battery cells by the plurality of springs. The method may include welding the second cell terminals of each battery cell to a respective welding protrusion of the conductive lattice structure. Actuating the pallet base plate toward the clamping plate may comprise clamping the top portion of the plurality of battery cells against a corresponding clamping finger coupled to the clamping plate.

The present disclosure provides battery module manufacturing clamping assembly and a method of clamping a battery pallet for welding.

Placing a plurality of battery cells for forming a battery module in a fixture to form a battery pallet and then clamping the battery pallet to the conductive lattice structure for welding requires that an upward force is provided on the plurality of battery cells for welding. According to the present disclosure, a battery module manufacturing clamping assembly comprises a pallet assembly, a clamping plate, and a lift system for actuating the pallet assembly with respect to the clamping plate. The pallet assembly comprises a spring under each battery cell in the battery pallet, and the battery pallet can be actuated by the lift system into a clamped position where the pallet base plate and the clamping plate cause a top portion of the plurality of battery cells to be in contact with the conductive lattice structure for welding, and wherein a pre-determined contact force is applied to the battery cells by the plurality of springs. The clamping plate provides a structural support that causes a downward force on the conductive lattice structure to ensure that there is sufficient contact at the weld site between the battery cell and the conductive lattice structure.

Accordingly, the required force at the weld site between the battery cell terminal and a welding protrusion of the conductive lattice structure is achieved for all battery cells on the battery pallet. The clamping plate provides a plurality of apertures to facilitate welding the conductive lattice structure to each of the plurality of battery cells. Advantageously, all the battery cells are in a state for which multiple welds of battery cells within the single field-of-view of the laser can be performed, allowing multiple high speed welds to be performed sequentially, and thus realizing substantial time savings and an increased throughput.

The present disclosure may be particularly advantageous for use in manufacturing battery modules for electric vehicles, where the battery cells of a battery pallet are welded to the conductive lattice structure, and the welded battery pallets are combined into a larger pack to form a battery module. However, it will also be appreciated that the systems and methods for clamping a battery pallet to a conductive lattice structure for creating a battery module as disclosed herein can be applied more generally to any application where a plurality of battery cells are to be welded.

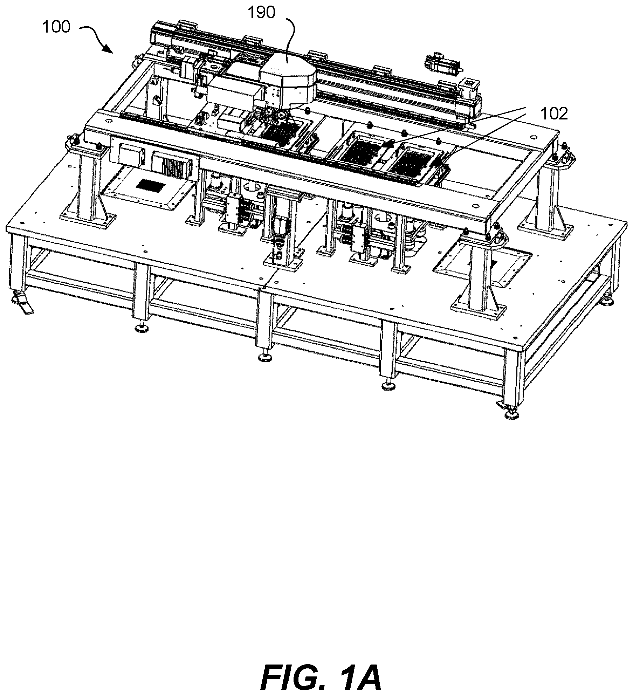

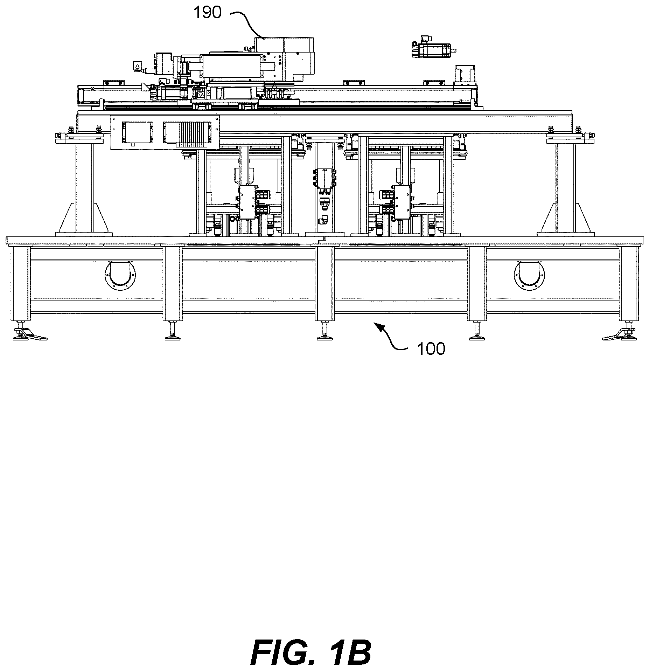

Embodiments are described below, by way of example only, with reference to Figures 1-5.

FIGs. 1A-B show an exemplary battery module manufacturing station 100 that may be used for welding a battery module in accordance with the present disclosure. More specifically, FIG. 1A shows a perspective view of the battery module manufacturing station 100 and FIG. 1B shows a front view of the battery module manufacturing station 100. The battery module manufacturing station 100 comprises one or more clamping plates 102 for use in clamping a battery pallet to a conductive lattice structure for welding, as described in more detail herein. The clamping plates 102 each comprise a plurality of apertures to facilitate welding a conductive lattice structure to each anode (-) or cathode (+) of the plurality of battery cells. The plurality of apertures are configured to expose weld sites between cell terminals of the batteries and welding protrusions of the conductive lattice structures. There may in particular be a first clamping plate with apertures configured to expose first weld sites for first cell terminals (e.g. cathode cell terminals), and a second clamping plate with second apertures configured to expose second weld sites for second cell terminals (e.g. anode cell terminals). There may also be multiple of the same clamping plates. In FIGs. 1A and 1B, there are four clamping plates shown, with two negative (anode) clamping plates and two positive (cathode) clamping plates.

The battery module manufacturing station 100 is configured to be used with a welding apparatus 190, which may for example be a laser welding apparatus. A gantry system may be used to move the welding apparatus 190 to different clamping plates and/or different regions of the same clamping plate to perform welding. Since the battery pallet is clamped to the conductive lattice structure for welding, multiple high-speed welds can be performed by the welding apparatus 190. The welding apparatus 190 can include one or more weld monitoring systems, such as a Laser Depth Dynamics (LDD) in process weld monitoring system to determine the quality of the weld. The LDD weld monitoring system, or an additional optical or laser system may be utilized to scan the battery cells when place within the battery pallet to determine positioning of the battery terminals and lattice contacts prior to initiating welding. Alternatively a camera, or some other system that allows an inline view of the welding area may be used. By inline, a scan head comes with an adapter to allow the laser to be connected, but can also come with a camera adapter to look through the same path the laser is travelling. The LDD weld monitoring system can then verify the actual welds after they occur.

In one example implementation, a battery module comprising a plurality of battery cells is clamped to a conductive lattice structure using a first clamping plate within a pallet. The first clamping plate exposes first weld sites for welding the negative cell terminals of the plurality of battery cells. The welding apparatus 190 may then weld all negative (cathode) cell terminals of the battery cells to the conductive lattice structure. The battery pallet may then be clamped to a second clamping plate that exposes second weld sites for welding the positive (anode) cell terminals of the plurality of battery cells. The welding apparatus 190 may then weld all positive cell terminals of the battery cells to the conductive lattice structure. Where there are multiple battery pallets clamped to multiple clamping plates, the welding apparatus 190 may perform welding for all the cell terminals of the multiple battery pallets. The clamping plates 102 are in a fixed position relative to the welding apparatus 190 providing a consistent distance for determining the welding positions for the weld file improving welding accuracy.

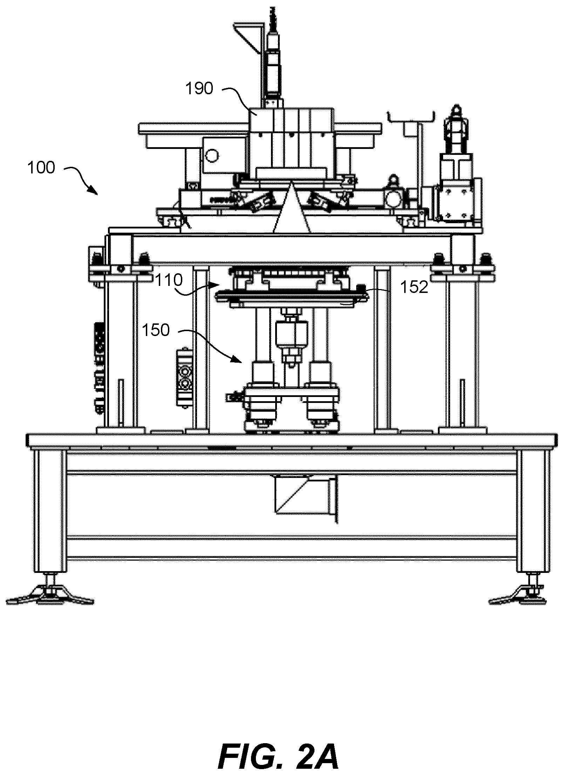

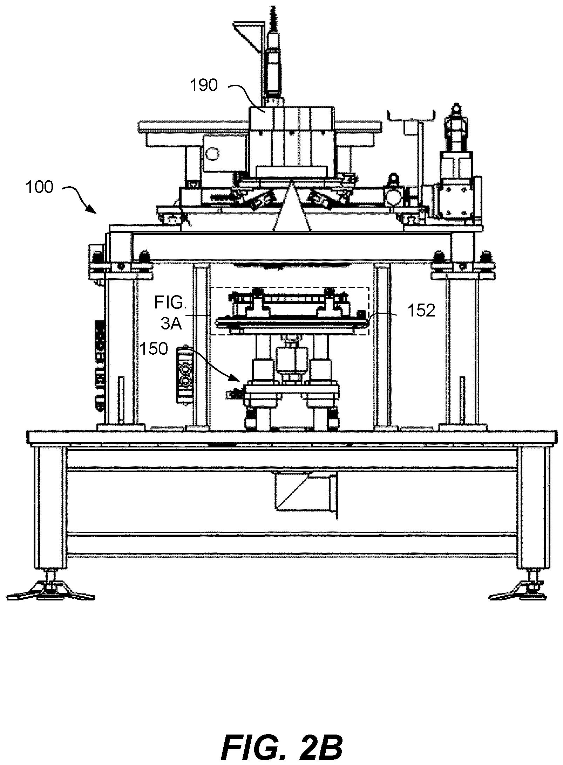

FIGs. 2A-B show the battery module manufacturing station 100 with a lift system in a raised and lowered position, respectively. Specifically, FIGs. 2A-B show side views of the battery module station 100 of FIGs. 1A-B, with a lift system 150 of the battery module station actuated between a raised position (FIG. 2A) and a lowered position (FIG. 2B).

The lift system 150 comprises a pallet lifting plate 152, which is configured to interface with battery pallet 110. As shown in FIG. 2A, the lift system 150 is raised via an actuator to lift the battery pallet and clamp the battery pallet against the clamping plate so that battery cells are in contact with the conductive lattice structure. In FIG. 2B, the lift system 150 lowers the pallet containing the battery module after the battery cells have been welded to the conductive lattice within the module. In this lowered position, a new battery pallet can be placed on the pallet lifting plate 152, thus providing a loading position where battery cells can be arranged to form the battery module. Various types of actuators may be used as part of the lift system to actuate the pallet frame, and may for example be a pneumatic actuator, a servo motor, etc.

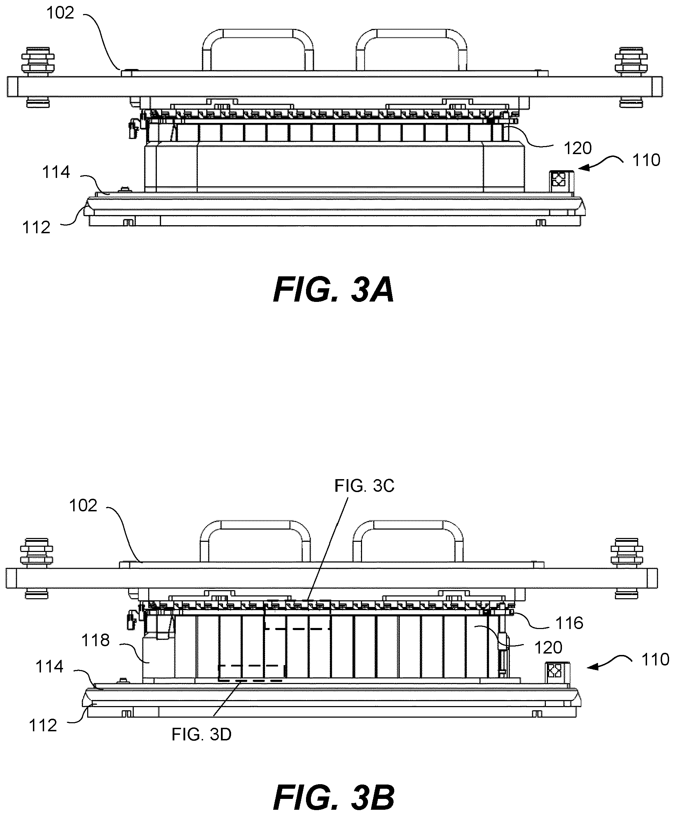

FIGs. 3A-I show the battery pallet 110 clamped to the clamping plate 102 and configured for welding. Specifically, FIG. 3A shows an enlarged view as indicated in FIG. 2B. The battery pallet 110 comprises a plurality of battery cells 120 arranged in a pallet assembly forming a battery module. The pallet assembly comprises a pallet frame 112 that is configured to be actuated by the lift system 150 towards and away from the clamping plate 102.

A pallet base plate 114 is disposed on the pallet frame 112. The pallet base plate 114 is configured to support the plurality of battery cells 120 forming the battery module thereon to form a battery pallet, and when the battery pallet is clamped to the clamping plate 102 the pallet base plate 114 is in a clamped position such that the pallet base plate 114 and the clamping plate 102 cause the battery cells 120 on the pallet base plate 114 to be in contact with the conductive lattice structure for welding element.

FIG. 3B shows the battery pallet 110 clamped to the clamping plate 102 as shown in FIG. 3A, with portions of the battery pallet removed to more clearly show the pallet assembly and the plurality of battery cells 120. The pallet base plate 114 comprises a plurality of holes or indentations configured to support the plurality of battery cells 120. The pallet assembly may also comprise a cell holder 116 arranged at the upper portion of the battery cells 120 and configured to further support the plurality of battery cells 120 on the pallet base plate 114. The cell holder 116 may similarly comprise a plurality of holes or indentations to support the plurality of battery cells 120. The pallet assembly may also comprise side walls 118 that surround the plurality of battery cells 120 arranged on the pallet base plate 114. The front surface of the side walls 118 is omitted from FIG. 3B to more clearly show the plurality of battery cells 120 arranged on the pallet base plate 114.

To weld the plurality of battery cells 120 to a conductive lattice structure, there needs to be sufficient contact between the terminal of the battery cells 120 and the portion of the conductive lattice being welded. Since the battery pallet 100 comprising the plurality of battery cells 120 arranged on the pallet base plate 114 is used for performing multiple high-speed welds, and the laser welding is performed from above, it is difficult to provide a contact force to individual cells. In this exemplary battery module manufacturing station, the pallet assembly comprises a spring assembly at the bottom of the pallet configured to provide a constant upward force to each of the battery cells 120 as the battery cells 120 are brought into contact with the conductive lattice structure. The spring also deals with variations in battery height and brings the batteries up to a hard surface / fixed surface, which simplifies the welding. The fixed welding position at the same distance from the laser allows for a more repeatable weld.

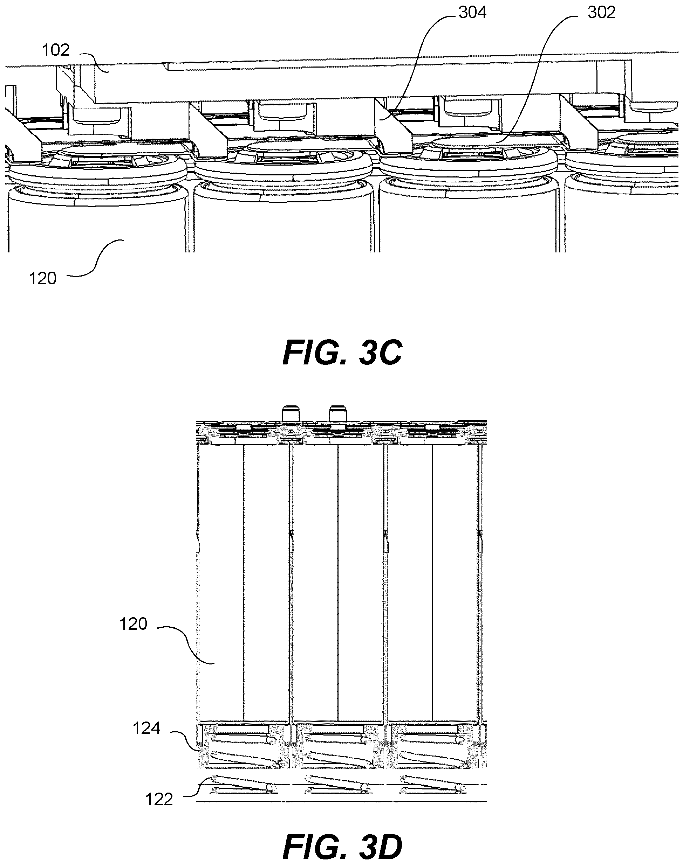

FIG. 3C shows an enlarged view of FIG. 3B, showing cell terminals of the battery cells 120 clamped to welding protrusions 302 of a conductive lattice structure, and held in place by clamping fingers 304 coupled to the clamping plate 102. In this example, the battery cells are cylindrical cells with both anode and cathode terminals on a single end of the battery cell. The cathode cell terminal may be located in a middle portion at the end of the battery cell, and the anode cell terminal may be located in an outer portion at the end of the battery cell. It would also be appreciated that other types of battery cells could be used instead of the cylindrical cells shown, with appropriate modifications to the battery module manufacturing station.

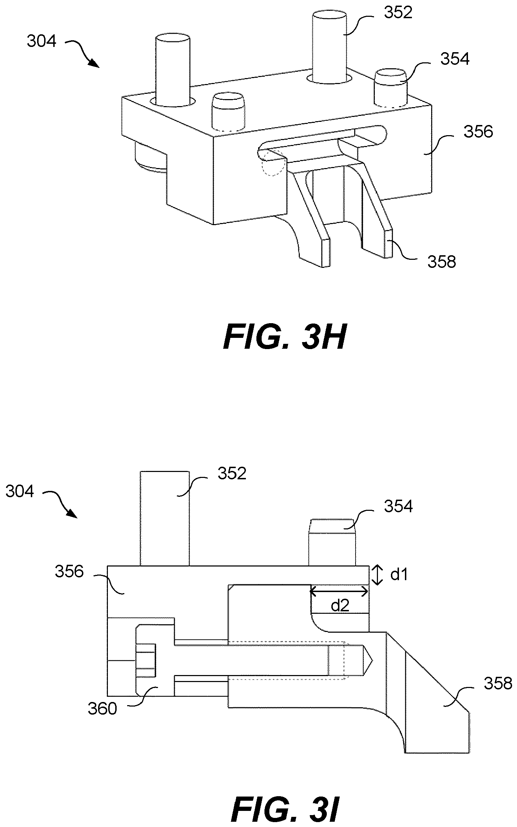

The clamping fingers 304 are depicted in FIGs. 3H and 3I. FIG. 3H shows a perspective view of an exemplary clamping finger 304, and FIG. 3I shows a side view of the clamping finger 304. As depicted in FIG. 3C, the clamping finger 304 is coupled to the clamping plate 102, and may be coupled via one or more screws 352 and/or dowels 354 as shown in FIGs. 3H and 3I. The clamping finger 304 has a body portion 356 and a finger portion 358. The clamping finger is made at least partially of an electrically isolating material. In a particular implementation, the body portion 356 may be made of plastic such as PEEK to provide superior electrical isolation. The finger portion 358 may be made of metal, and may for example be a steel insert, which provides clamping to the battery cells. As seen in FIG. 3H, the finger portion 358 may comprise a T-slot / wing design to help retain the metal finger portion 358 in the plastic body portion 356. A further screw 360 shown in FIG. 3I may be threaded through the body portion 356 to fasten the finger portion 358. The body portion 356 and the finger portion 358 may be particularly designed to prevent electrical creepage and shorting, which may be achieved by setting the finger portion 358 recessed from edges of the body portion 356 as defined by distances d1 and d2. While the clamping finger 304 shown in FIGs. 3H and 3I provide an exemplary embodiment of a clamping finger to achieve clamping to the battery cell terminals, a person skilled in the art will appreciate that other configurations of a clamping finger may be used without departing form the scope of this disclosure. For example, instead of a two-piece clamping finger comprising a body portion and a finger portion, the clamping finger may comprise a single piece made of an electrically isolating material such as a ceramic, which may provide better rigidity and reduced error from tolerance stack-up compared to a two-piece clamping finger design.

FIG. 3D shows an enlarged view of the spring assembly in the pallet assembly as denoted in FIG. 3B, with the pallet base plate 114 removed to more clearly shown the spring assembly. As seen in FIG. 3D, the spring assembly comprises a plurality of springs 122, which are arranged on the pallet base plate. The spring assembly further comprises a plurality of spring caps 124 respectively coupled to the plurality of springs 122, and each of the plurality of spring caps 124 is configured to interface with a respective battery cell 120.

As the pallet base plate 114 is actuated to the clamped position and the plurality of battery cells 120 are brought into contact with a clamping finger 304 coupled to the clamping plate 102 and welding protrusion 302 of the conductive lattice structure, the springs 122 begin to compress and apply an upwards force to the battery cells 120 via the spring caps 124. The springs 122 may be selected depending upon the specific application in order to provide sufficient constant upwards force to the battery cells 120. There may generally be no specific upper threshold on the clamping force, other than a force that would damage the battery cell or welding protrusion of the conductive lattice structure. In some applications, the springs 122 may be selected to provide a force of 35 Newtons to the battery cells 120 when compressed by 3 mm.

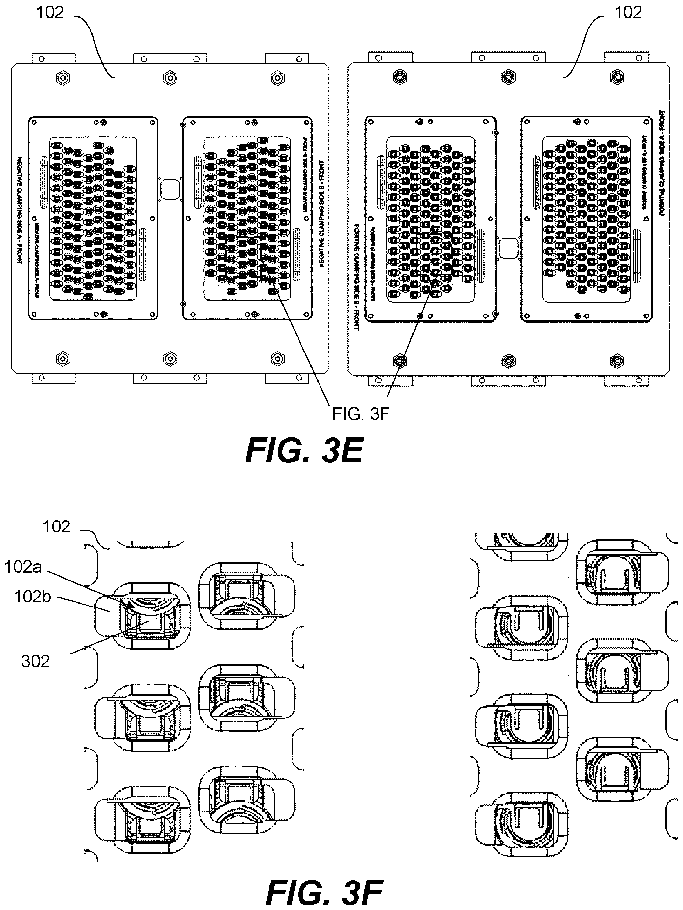

FIG. 3E shows a top view of FIG. 3B, which more clearly shows the clamping plate 102. FIG. 3F shows an enlarged view of an area of the clamping plate 102. As previously described, the clamping plate 102 provides a plurality of apertures 102a that expose weld sites between the battery cell terminals and welding protrusions 302 of the conductive lattice structure to facilitate welding the conductive lattice structure to each of the plurality of battery cells. Accordingly, the clamping plate 102 may be provided with apertures according to the cell terminal to be welded to the conductive lattice structure (i.e. different clamping plates are used for welding anode/cathode cell terminals).

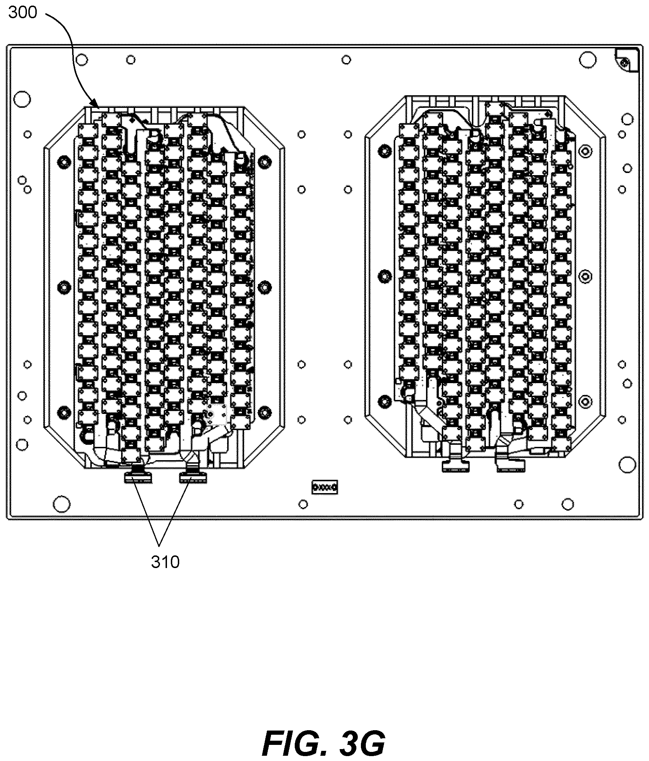

FIG. 3G shows the top view depicted in FIG. 3E, with the clamping plate 102 removed, thus showing the conductive lattice structure 300. The plurality of battery cells are brought into contact with the conductive lattice structure 300 from below as previously described. The conductive lattice structure 300 comprises a plurality of welding protrusions 302 corresponding to each battery cell terminal, as also shown in FIGs. 3C and 3F. The plurality of welding protrusions 302 are coupled to electric bus bars 310, which are coupled to anode and cathode terminals.

Referring back again to FIG. 3E, since the plurality of battery cells 120 arranged in the battery module 110 are simultaneously brought into contact with the conductive lattice structure and are configured for welding, multiple high-speed welds can be performed as previously described. Further, in accordance with the present disclosure multiple weld sites may be welded from a single welding apparatus location. The clamping plate 102 should therefore be sufficiently thin so as not to obscure the laser from the welding apparatus, which may not be directly overhead of the weld site. The clamping plate 102 may also comprise tapered portions 102b along at least a portion of the apertures 102a to facilitate welding from a single welding apparatus location (i.e. to facilitate the welding laser reaching the welding site at an angle).

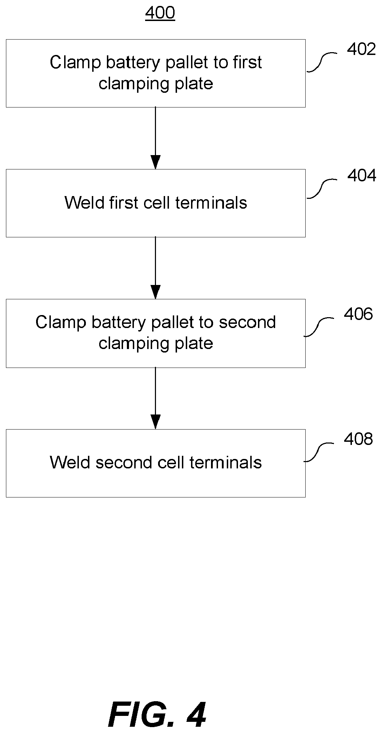

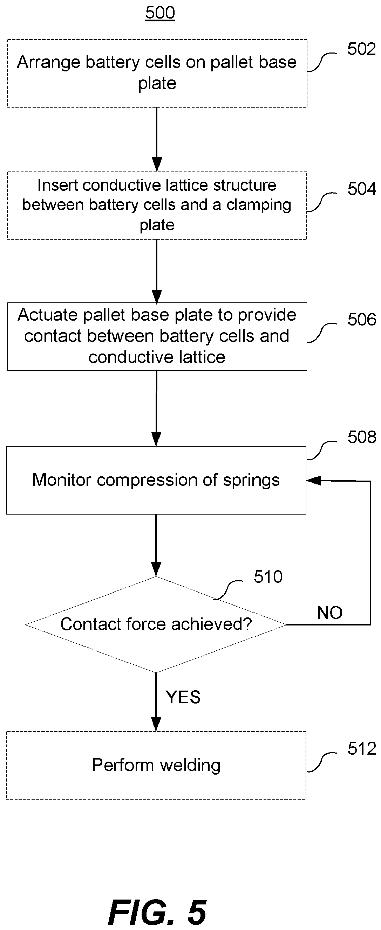

FIG. 4 shows a method 400 of manufacturing a battery module. The method comprises clamping a battery pallet containing a plurality of battery cells to a first clamping plate (402). The battery pallet containing the plurality of battery cells is clamped to the clamping plate by positioning of a battery pallet below the welding plate when the cell terminals of the plurality of battery cells are in contact with the conductive lattice structure, and a pre-determined contact force is applied to the battery cells by the plurality of springs, and is further described with reference to FIG. 5.

The method further comprises welding the first cell terminals to a respective welding protrusion of the conductive lattice structure (404). As previously described, the clamping plate comprises a plurality of apertures that expose first weld sites between first cell terminals of the plurality of battery cells and respective of a plurality of welding protrusions of the conductive lattice structure. In particular implementations, the first cell terminals that are welded may be the negative cell terminals (anode), as these negative cell terminals may have a smaller cross-sectional area for performing the welding, and therefore it may be important to weld these cell terminals first.

The battery cells disposed in a battery pallet are clamped to a second clamping plate (406). The second clamping plate provides a second plurality of apertures to facilitate welding the conductive lattice structure to each of the plurality of battery cells, and the second plurality of apertures expose second weld sites between second cell terminals (e.g. positive (cathode) cell terminals) or a second subset of negative (anode) terminals of the plurality of battery cells and respective of the plurality of welding protrusions. The battery pallet is clamped to the second clamping plate when the cell terminals of the plurality of battery cells are in contact with the conductive lattice structure, and a pre-determined contact force is applied to the battery cells by the plurality of springs.

The method further comprises welding the second cell terminals to a respective welding protrusion of the conductive lattice structure (408). Again, the welding of the second cell terminals may advantageously be performed region-by-region, where welding the cell terminals within a given region is performed from a single welding apparatus viewpoint. As such, multiple welding plates may be used based upon the view point range of the laser and the ability to target various weld points from a single position.

FIG. 5 shows a method 500 of clamping a battery pallet for welding. A plurality of battery cells may be arranged on a pallet base plate (502), i.e. when the battery cells are not already arranged on the pallet base plate. As previously described, the pallet base plate comprises a plurality of springs and a plurality of spring caps coupled to the plurality of springs, and each of the plurality of spring caps are configured to interface with a respective battery cell.

A conductive lattice structure may be inserted between the plurality of battery cells and a clamping plate (504), i.e. when not already present. Again, the conductive lattice structure may already be present on the plurality of battery cells and even welded to certain cell terminals if the battery pallet has been previously clamped to a different clamping plate and some of the cell terminals welded. Each clamping plate may be associated with a sub-group of contacts that need to be welded, for example a first plate may be for a subset of negative (cathode) terminals and a second plate may be for a second subset of cathode terminals and additional plates are provided for the anode terminals.

The pallet base plate is actuated to provide contact between the plurality of battery cells and the conductive lattice structure (506). More specifically, the pallet base plate is actuated towards the clamping plate to cause a top portion of the battery cells to be in contact with the clamping fingers and conductive lattice structure. The conductive lattice structure comprises an electrical bus bar and a plurality of welding protrusions coupled to the bus bar, and each battery cell is placed into contact with a respective welding protrusion.

As the battery cells are placed into contact with the conductive lattice structure and the pallet base plate continues to be actuated, the springs begin to compress and apply an upward force to each of the battery cells. A compression amount of the springs is monitored (508), which provides an indication of a contact force being is applied to the bottom of the battery cells to ensure good contact between the top battery cell terminals and the weld protrusion of the conductive lattice at the weld site. A plurality of battery cells are arranged in the pallet assembly of the battery plate, and the conductive lattice structure is inserted between the plurality of battery cells and the clamping plate.

A determination can be made as to whether a pre-determined contact force or location is achieved (510). If the pre-determined contact force or location is not achieved (NO at 510), the compression of the springs continue to be monitored (508) as the pallet base plate is actuated towards the conductive lattice structure.

If the pre-determined contact force is achieved (YES at 510), the battery cells are successfully clamped to the conductive lattice structure, and welding may be performed (512).

It would be appreciated by one of ordinary skill in the art that the system and components shown in the figures may include components not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as described herein.

It is contemplated that any part of any aspect or embodiment discussed in this specification can be implemented or combined with any part of any other aspect or embodiment discussed in this specification.

It should be recognized that features and aspects of the various examples provided above can be combined into further examples that also fall within the scope of the present disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

## Claims

1. A battery module manufacturing clamping assembly, comprising:
a pallet base plate configured to support a plurality of battery cells thereon;
a plurality of springs arranged on the pallet base plate;
a plurality of spring caps respectively coupled to the plurality of springs, and each of the plurality of spring caps configured to interface with a lower portion of a respective battery cell of the plurality of batteries;
a clamping plate providing a plurality of apertures to facilitate welding a conductive lattice structure to each of the plurality of battery cells; and
a lift system configured to actuate the pallet base plate between a loading position for arranging the plurality of battery cells on the pallet base plate and a clamped position where the pallet base plate and the clamping plate cause a top portion of the plurality of battery cells to be in contact with the conductive lattice structure for welding, and wherein a pre-determined contact force is applied to the battery cells by the plurality of springs.

2. The battery module manufacturing clamping assembly of claim 1, wherein the conductive lattice structure comprises an electrical bus bar and a plurality of welding protrusions coupled to the electrical bus bar, and wherein each of the plurality of springs are configured to apply the pre-determined contact force when compressed to provide contact between each of the plurality of battery cells and respective of the plurality of welding protrusions.

3. The battery module manufacturing clamping assembly of claim 2, wherein the plurality of apertures of the clamping plate expose first weld sites between first cell terminals of the plurality of battery cells and respective of the plurality of welding protrusions.

4. The battery module manufacturing clamping assembly of claim 3, further comprising a second clamping plate providing a second plurality of apertures to facilitate welding the conductive lattice structure to each of the plurality of battery cells, wherein the second plurality of apertures of the second clamping plate expose second weld sites between second cell terminals of the plurality of battery cells and respective of the plurality of welding protrusions.

5. The battery module manufacturing clamping assembly of claim 4, further comprising translation means for translating the lift system between the clamping plate and the second clamping plate.

6. The battery module manufacturing clamping assembly of any one of claims 1 to 5, further comprising a pallet frame supporting the pallet base plate, and a pallet lifting plate of the lift system, wherein the pallet frame is configured to interface with the pallet lifting plate.

7. The battery module manufacturing clamping assembly of claim 6, wherein the lift system comprises an actuator for actuating the pallet lifting plate in a vertical direction.

8. The battery module manufacturing clamping assembly of any one of claims 1 to 7, further comprising a cell holder configured to interface with the upper portion of the plurality of battery cells to further support the plurality of battery cells on the pallet base plate.

9. The battery module manufacturing clamping assembly of any one of claims 1 to 8, further comprising a clamping finger coupled to the clamping plate against which the plurality of battery cells are clamped.

10. The battery module manufacturing clamping assembly of claim 9, wherein the clamping finger is made at least partially of an electrically isolating material.

11. A method of manufacturing a battery module, comprising:
arranging a plurality of battery cells on a pallet base plate, the pallet base plate comprising a plurality of springs and a plurality of spring caps coupled to the plurality of springs, each of the plurality of spring caps configured to interface with a lower portion of a respective battery cell;
inserting a conductive lattice structure between the plurality of battery cells and a clamping plate, the clamping plate providing a plurality of apertures to facilitate welding a conductive lattice structure to each of the plurality of battery cells; and
actuating the pallet base plate toward the clamping plate to cause a top portion of the plurality of battery cells to be in contact with the conductive lattice structure for welding, wherein a pre-determined contact force is applied to the battery cells by the plurality of springs.

12. The method of claim 11, wherein the plurality of apertures of the clamping plate expose first weld sites between first cell terminals of the plurality of battery cells and respective of a plurality of welding protrusions of the conductive lattice structure, the method further comprising welding the first cell terminals of each battery cell to a respective welding protrusion.

13. The method of claim 12, further comprising translating the pallet base plate to a second clamping plate providing a second plurality of apertures to facilitate welding the conductive lattice structure to each of the plurality of battery cells, wherein the second plurality of apertures of the second clamping plate expose second weld sites between second cell terminals of the plurality of battery cells and respective of the plurality of welding protrusions, and the method further comprising:
actuating the pallet base plate toward the second clamping plate to cause the top portion of the plurality of battery cells to be in contact with the conductive lattice structure and the second clamping plate for welding, wherein the pre-determined contact force is applied to the battery cells by the plurality of springs.

14. The method of claim 13, further comprising welding the second cell terminals of each battery cell to a respective welding protrusion of the conductive lattice structure.

15. The method of any one of claims 11 to 14, wherein actuating the pallet base plate toward the clamping plate comprises clamping the top portion of the plurality of battery cells against a corresponding clamping finger coupled to the clamping plate.
